# EUROPEAN PATENT APPLICATION

(11) **EP 2 508 556 A1**
(43) Date of publication of application: **10.10.2012**
(21) Application number: 10834268.4
(22) Date of filing: 03.12.2010
(51) Int. Cl.: C08K 3/28, C08L 23/12, B29C 70/26, B82Y 30/00

(54) **NANOCOMPOSITE MATERIALS OF POLYPROPYLENE AND CARBON NITRIDES, PROCEDURE FOR THE OBTAINMENT THEREOF AND APPLICATIONS**

(30) Priority: 04.12.2009 ES 200931113
(71) Applicant: Consejo Superior De Investigaciones Científicas (CSIC), 28006 Madrid (ES); Universidad Autónoma De Madrid (UAM), 28049 Madrid (ES)
(72) Inventor: NAFFAKH CHERRADI-HADI, Mohammed, E-28006 Madrid (ES); GÓMEZ RODRÍGUEZ, María de los Ángeles, E-28006 Madrid (ES); LÓPEZ FERNÁNDEZ, Vicente, E-28049 Madrid (ES); ZAMORA ABANADES, Félix, E-28049 Madrid (ES)
(74) Representative: Pons Ariño, Angel
(86) International application number: PCT/ES2010/070797
(87) International publication number: WO 2011/067452

(57) **Abstract**

The present invention relates to a nanocomposite material comprising a polymer matrix of polypropylene and nanoparticles of carbon nitride, having a spherical or ellipsoidal shape, to the procedure for the obtainment thereof and to the uses thereof in the manufacture of ultralight and ultrahard thermoplastic articles.

## Description

The present invention relates to a nanocomposite material that comprises a polymer matrix of polypropylene and carbon nitride nanoparticles, to the process for obtaining it and to the uses thereof in the manufacturing of thermoplastic articles.

### PRIOR STATE OF THE ART

Progress in modern societies has always been related to the development and improvement of materials. The obtainment of better features (resistance, lightness, durability, etc.) and the need to combine many of these properties in a single material led to the development of multi-functional materials that combine materials with very different characteristics and features in their structure. These new materials include the so-called polymer nanocomposites, which incorporate nanoparticles at the nanometric level and offer competitive options in the materials market.

Polypropylene is one of the most widely consumed polymers, and which has aroused the greatest scientific and technological interest in the field of polymer composites and nanocomposites, due to its low cost and versatility, in terms of both the transformation processes and the applications thereof. Its success lies, on the one hand, on its excellent intrinsic properties and, on the other, on the constant progress in the processes for manufacturing it, which makes it possible to adapt and be adapted to meet the needs of all types of markets.

In 1954, Natta developed, starting from the catalysts described by Ziegler in 1953, catalysts capable of producing polypropylenes of high molecular weight, in addition to a high tacticity control. Thus, by changing the polymerisation conditions it is possible to obtain three types of polypropylene (PP) with a different tacticity: isotactic, syndiotactic and atactic. The crystallinity properties in isotactic PP make it, and the derivatives thereof, applicable in numerous industrial sectors, such as packing and packaging (plugs, bottles, films, tubes, etc.), the automotive industry (bumpers, dashboards, batteries, etc.), electrical appliances, drainages, furniture, toys, construction, textiles, agriculture, etc.

In order to improve some of the properties of polypropylene or reduce the cost thereof, it is common to fill it with mineral loads, such as glass fibre, talc, mica, calcium carbonate, silica and mineral clays, etc., to form composite materials. In these materials, the polymer and the additives are not homogeneously dispersed at the nanometric level, but at the micrometric level. The reinforcement percentage is usually greater than 10 %, which, in general, makes it possible to significantly improve the mechanical properties, such as the rigidity, but, on the other hand, reduces the tenacity, the transparency and the surface quality, whilst increasing the weight and the viscosity of the molten material. It is well-known that, in the case of polypropylene, there is not a great affinity between the polar load particles and the non-polar matrix, for which reason the interactions between the two phases are very limited. However, the interphase may be modified by means of adequate surface treatments, which involve using dual-character molecules, with a polar part that is capable of some type of interaction with the surface of the mineral load and an organic substituent susceptible to interacting in some manner with the polypropylene matrix. The interaction force with the matrix may vary from the force necessary to improve the wettability of the surface of the load by reducing the surface energy, as in the case of lubricants or dispersant agents, to a force that favours the entanglement of the polymer molecules at the particle level or, in extreme cases, generates chemical bonds with the matrix (coupling agents).

Nanocomposites are a new form of composite materials. The polymer is filled with particles that have at least one dimension in the nanometric range. If the three dimensions of the particle are nanometric, the nanoparticle is defined as isodimensional (e.g. silsesquioxanes (POSS), inorganic spherical fullerene nanoparticles (IF-WS₂), etc.). However, in many commercial products, the steps wherein the nanoloads are modified and dispersed continue to play an essential role in the large-scale processing of these materials.

Consequently, there is a need for an alternative in the search for materials that may be used to produce new advanced polymer nanocomposites by simple methods. Studies performed on other systems based on lubricating inorganic spherical fullerene nanoparticles of the WS₂ type have shown spectacular results as regards the improvement of the physical properties, in general, of different polymer matrices (polypropylene [Naffakh et al., J. Polym. Sci. Part B: Polym. Phys. 45, 2309 - 2321 (2007)], nylon-6 [Naffakh, M.; Gómez, M. A.; Jiménez, I. Patent P200930434, CSIC, Spain (2009)] and phenylene polysulfide [Naffakh et al., J. Phys. Chem. B. 113, 10104 - 10111 (2009)]).

### DESCRIPTION OF THE INVENTION

The present invention provides a nanocomposite material that comprises a polymer matrix of polypropylene and carbon nitride nanoparticles, preferably with an ellipsoidal or spherical geometry; it also provides a process for obtaining it and the uses thereof in the manufacturing of thermoplastic articles.

A first aspect of the present invention relates to a material that comprises:
a. A polymer matrix which comprises polypropylene, and
b. carbon nitride nanoparticles.

The polypropylene polymer matrix belongs to the family of polyolefins.

The matrix may be any polypropylene derivative, i.e. a homopolymer, a copolymer or a combination of 2 or more polymers, where at least one of them is polypropylene and the other is a thermoplastic polymer. Said thermoplastic polymer is known by any person skilled in the art.

In the present invention, "copolymer" is understood to mean a macromolecule composed of two or more different repetitive units, called monomers, which may be bound in different ways by means of chemical bonds; the monomers that form the copolymer may be distributed in a random or a periodic fashion.

In a preferred embodiment, the polypropylene polymer is of the isotactic type. This isotactic polypropylene is a homopolymer that is composed of propylene as the monomer unit; the polymer is composed of these monomers linked by the chiral carbon at the same position, which causes the isotactic polypropylene to have greater industrial interest, due to its improved mechanical properties; these primarily arise from a greater crystallinity. Moreover, it has a high durability, high chemical resistance and good electrical insulation.

In a preferred embodiment, the carbon nitride nanoparticles are selected from the list that comprises carbon nitrides, these carbon nitrides being selected from C₃N₄, CN or any combination thereof.

Preferably, the nanoparticle content is less than 10 % by weight of the total material and, more preferably, this content is lower than 2 %.

The carbon nitride nanoparticles may have any geometric shape; preferably, they have a spheroidal or ellipsoidal geometry, and there may be a mixture of particles with both geometries.

In another preferred embodiment, the carbon nitride nanoparticles have a size of less than 500 nm. And, in a more preferred embodiment, these nanoparticles have a size of less than 300 nm.

Since the filling particles in the polypropylene matrix have dimensions of the order of nanometres, the material is considered to be a nanocomposite material.

The use of carbon nitrides as lightweight reinforcements is based on the intrinsic properties that characterise these nanoreinforcements, related to their chemical structure and their spherical or ellipsoidal shape, which make it possible to prevent anisotropy problems commonly presented in laminar particles, and also because, in the process of obtainment, the mixing and dispersion of quasi-spherical particles is much better than that of laminar or fibrous particles, as in the case of nanotubes or nanofibres. Due to the hardness of carbon nitrides, ultra-hard and, at the same time, ultra-light materials are obtained.

In a preferred embodiment, the material may further include additives, loads or any combination thereof. The additives used may be any additives habitually used in the plastics industry. In an even more preferred embodiment, said additives are selected from compatibilising agents, dispersant agents, plasticisers, colouring agents, flame retardants, antioxidants, nucleating agents, or any combination thereof.

A second aspect of the present invention relates to a process for obtaining a composite material of polypropylene and carbon nitride nanoparticles, which is processed by means of the physical mixing of the polymer matrix in the molten state with the carbon nitride nanoparticles, and may be performed in a single step, without the need to add modifiers (or compatibilising agents) or surfactants. However, the addition thereof may reduce the processing times.

These nanoparticles offer an improvement in the thermal and mechanical properties of the polymer matrix without sacrificing the processability thereof.

Preferably, the processing is performed at temperatures lower than 300 °C, and, more preferably, at temperatures lower than 220 °C.

The methods used for the processing are those used in the plastics industry, and are preferably selected from the list that comprises injection, extrusion, thermoconforming, blow moulding or rotational moulding, spinning, calendering and lamination. And, more preferably, the processing method is selected from: moulding, extrusion or injection.

The fact that the process for obtaining the nanocomposite materials of the present invention is based on processing from the molten state makes it a process that is environmentally compatible with industrial processes.

Moreover, it has the advantage that the process for obtaining these nanocomposite materials may be performed in a single step, without the need to add modifiers or surfactants; should these be added, they may be added, in a simple manner, in the mixing chamber. And the fact that this polymerisation process may be performed *in situ* does not present the disadvantages associated with the use of organic solvents, and is compatible with industrial processes.

A third aspect of the present invention relates to the use of the material described above for the manufacturing of thermoplastic articles.

The articles of the present invention may be filaments, fibres, single-layer or multi-layer films, wires, tubes or any other geometric shape or shape factor that is applicable in the polypropylene sector.

As regards the final characteristics of the products within the scope of the present invention, different factors are involved, such as the design thereof or the physical-chemical properties of the materials that make them up. In the case of polypropylene compositions, these properties are primarily determined by chemical factors (type of polymer, molecular architecture, presence of C₃N₄ particles, etc.) and the processing conditions. The latter affect the residual stresses present in the product and the structure and morphology obtained in the material (orientation, degree of dispersion, percent crystallinity, spherulite size, etc.). All these chemical and morphological variables are interrelated through the processing and are the ones that determine the final properties of a product. In the present invention, the understanding of the structure-processing relations has been essential to improve the final properties by means of the process used in the present invention.

Throughout the description and the claims, the word "comprises" and the variants thereof are not intended to exclude other technical characteristics, additives, components or steps. For persons skilled in the art, other objects, advantages and characteristics of the invention will arise partly from the description and partly from the practise of the invention. The following examples and drawings are provided for illustrative purposes, and are not intended to limit the scope of the present invention.

### DESCRIPTION OF THE FIGURES

Figure 1. - Shows the scanning electron microscopy image of the polypropylene nanocomposite with 1 % of C₃N₄.
Figure 2. - Shows the size distribution of the C₃N₄ particles.
Figure 3. - Shows the variation in the crystallisation temperature of polypropylene as a function of the cooling rate and as a function of the concentration of C₃N₄.
Figure 4. - Shows the variation in the nucleating activity (*ϕ*) and the Nucleation Efficiency (NE) with the concentration of C₃N₄, in accordance with the Fillon and Dobreva models, for the polypropylene nanocomposites.
Figure 5. - Shows the dynamic record of the storage modulus.
Figure 6. - Shows the dynamic record of the loss factor of the polypropylene nanocomposites at 1 Hz.

### EXAMPLES

Below we will illustrate the invention by means of assays performed by the inventors, which show the specificity and effectiveness of the composite material with a polymer matrix of polypropylene and a filling of carbon nitride nanoparticles.

### EXAMPLE 1. Processing of nanocomposite materials with a polypropylene matrix and C₃N₄ particles

New polymer nanocomposites have been obtained by the incorporation of different concentrations of carbon nitride particles into the polyolefin that is most widely used in industry, isotactic polypropylene, as described in the article by Vicente López et al., ACS Nano, 3 (11) 3352 - 3357 (2009). The carbon nitrides used were synthesised in the laboratory under mild solvothermal synthesis conditions, which provided a new material with exceptional physical properties. I.e. by the reaction between 1.0 g 1,3,5-trichlorotriazine (5.4 mmol) with 1.5 g sodium azide (23.1 mmol) in 30 ml of dry toluene, all this in a teflon-coated stainless steel reactor, at a temperature of 230 °C and a maximum working pressure of 1.2 bar for 20 hours. The sizes obtained show a mean diameter ranging between 1 nm and 4 µm, and a mean content of nanoparticles with diameters between 1 nm - 2 nm of 20 % by weight with respect to the initial solid.

The formulations based on isotactic polypropylene and carbon nitride particles of the C₃N₄ type at compositions ranging between 0.1 % and 2 % by weight were prepared by mixing in the molten state in a micro-extruder (Thermo-Haake Minilab system), using the following optimal processing conditions: temperature = 210 °C, time = 10 min and screw velocity = 150 rpm. Subsequently, the resulting mixtures were compression moulded in a hot-plate press, in the form of 0.5-mm-thick films. The different nanocomposite samples presented a thermal stability similar to that of pure polypropylene, which indicates that the preparation method and the concentration of C₃N₄ did not significantly affect the polymer matrix.

### EXAMPLE 2. Analysis of the dispersion of C₃N₄ particles in a polypropylene matrix

A sample of the nanocomposite obtained in Example 1 was analysed;

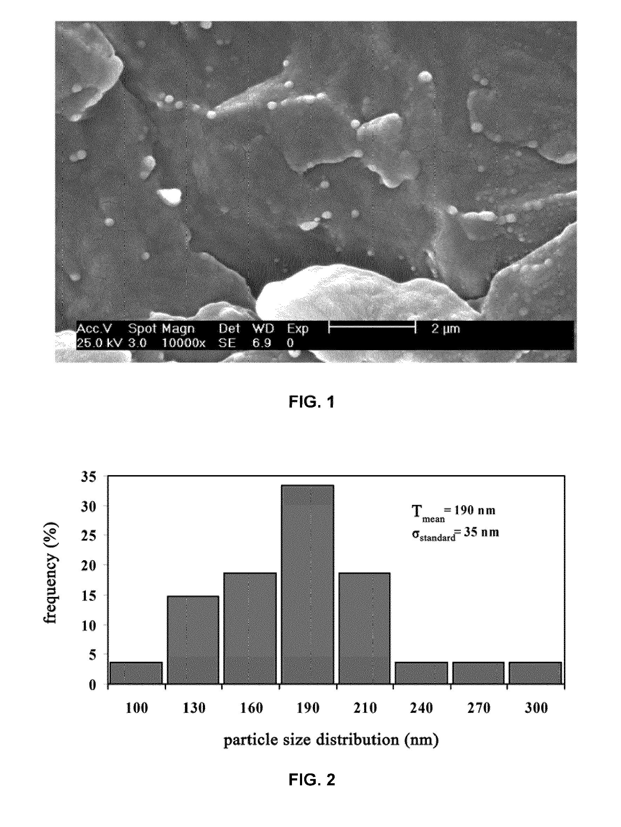

Figure 1 shows a scanning electron microscopy image of a nanocomposite with 1 % of C₃N₄ broken up in liquid nitrogen, wherein we may observe a good dispersion of C₃N₄ in the polypropylene matrix (Figure 2). The particle dimensions range between 100 nm and 300 nm, with a main value of the order of 190 nm and a standard deviation of 35 nm. Taking into consideration the initial particle dimensions, the results obtained seem to indicate either that the greater-sized particles may release some of their layers so as to reach the sizes observed in the nanocomposites, or that they cannot be incorporated inside the polypropylene matrix under the aforementioned processing conditions. On the other hand, the presence of said particles does not seem to affect the crystalline structure of polypropylene. Wide Angle X-ray Scattering (WAXS) studies of the nanocomposites crystallised under the dynamic crystallisation conditions detailed below show the appearance of reflections associated with the crystal planes characteristic of the monoclinic α polymorph of pure polypropylene.

### EXAMPLE 3. Analysis of the thermal properties of the polypropylene nanocomposites

The dynamic differential scanning calorimetry experiments were performed in a Mettler TA4000/DSC30 calorimeter on polypropylene nanocomposites with concentrations of C₃N₄ of 0.1, 0.5, 1 and 2 % by weight. The measurements were taken in closed aluminium capsules, with a sample weight ranging between 11 mg and 12 mg, in an inert nitrogen atmosphere.

The crystallisation process was performed by cooling from the molten state at 210 °C for 5 minutes, to 30 °C, at rates of 2, 5, 10 and 15 °C/min, and the crystallisation temperature, *T_{c}*, was determined to be the temperature corresponding to the minimum of the exotherm associated with said process. Subsequently, the samples were subjected to a heating process at different rates (2, 5 and 10 °C/min), in order to calculate the melting temperature and the enthalpy corresponding to each endotherm. In order to estimate the crystallinity of each sample, a value of 177 J/g associated with 100 % crystalline monoclinic polypropylene was used.

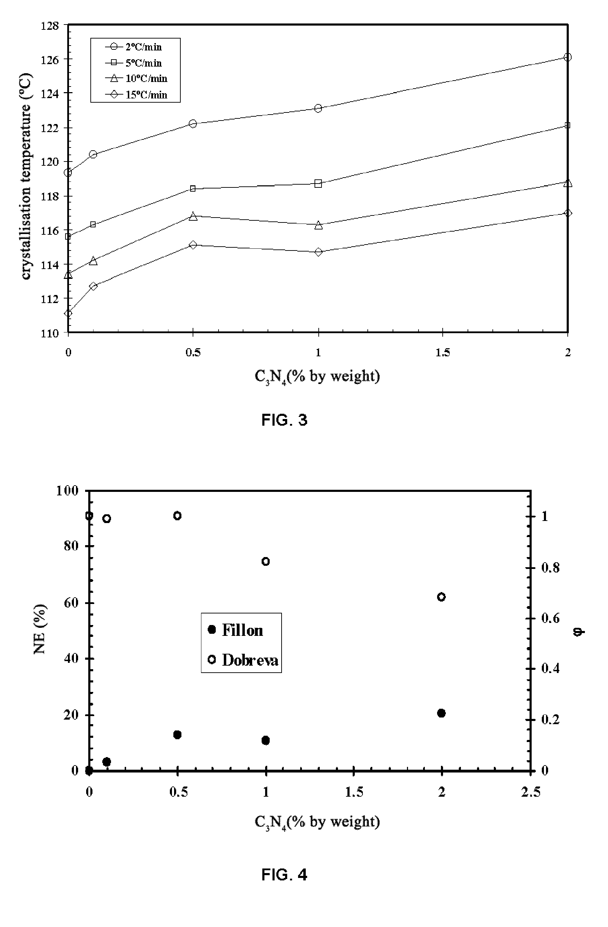

The results obtained show the nucleating effect of C₃N₄ on the crystallisation of polypropylene, and it was found that, regardless of the cooling rate, in all cases one may observe an increase in the crystallisation temperature with the concentration of C₃N₄, especially at 2 % compositions, which reach a 6 °C increase (Figure 3). This indicates an increase in the crystallisation rate of the polymer matrix, which may translate into a reduction in the processing cycles and, consequently, significant savings in the cost of the finished products. Likewise, the crystallinity of the polymer matrix undergoes an increase of the order of 9 % with an increase in the concentration of C₃N₄ (53 % for the pure polymer, and 55, 56, 57 and 58 % for the nanocomposites with 0.1, 0.5, 1 and 2 % of C₃N₄, respectively). On the other hand, Small-Angle X-ray Scattering (SAXS) measurements, with synchrotron radiation, of the samples crystallised from the molten state were taken as a function of the temperature, in order to analyse the influence of C₃N₄ on the lamellar structure of polypropylene. The results obtained do not show significant variations in the long spacing of polypropylene at room temperature (15 nm for the pure polymer and 16 nm for the nanocomposite with 1 % of C₃N₄). It is necessary to mention that the long spacing may be defined as the sum of the thicknesses of the crystalline flakes and the amorphous areas, which is calculated by means of the SAXS diffraction maxima using the Lorentz correction, i.e. by multiplying the intensity by the *s*² factor, and representing *I*s² against dispersion vector s (s = (2/λ). sinθ, where *θ* is the dispersion angle and *λ* is the wavelength). It is well-known that the long spacing and the crystallinity data may be used as a simple approximation in order to obtain data on the thickness of the crystalline flakes of the polypropylene crystals. Therefore, the increase in the crystallinity of the nanocomposites may be correlated with an increase in the size of the polypropylene crystals in the nanocomposites. As regards the analysis of the melting process of the nanocomposites subsequent to the dynamic crystallisation from the molten state, the results obtained do not show significant variations in the melting temperature of polypropylene.

### EXAMPLE 4. Nucleation efficiency of the C₃N₄ particles

It is well-known that the crystal nucleation capacity of a given nucleating agent may be determined by the increase in the crystallisation temperature; one of the most suitable methodologies, especially for comparison purposes, is that which considers the self-nucleation of the matrix due to the presence of polypropylene crystals, i.e. the so-called Fillon model (Fillon et al. J. Polym. Sci. Polym. Phys. 31, 1395 - 1405 (1993)), which represents the ideal crystal nucleation situation of the system. If we consider a value of 140 °C as the maximum self-nucleation temperature for polypropylene (Marco et al. J. Appl. Polym. Sci. 84, 1669 - 1679 (2002)), nucleation efficiency (NE) values were obtained ranging between 3 % to 20 % for concentrations ranging between 0.1 and 2 % of C₃N₄, for a cooling rate of 10 °C/min.

Moreover, there is another widely used method in the literature, called the Dobreva-Gutzow model (Dobreva et al. J. Non-Cryst. Solids 162, 13 ― 25 (1993)). This method considers that, when the crystallisation process takes place within a temperature range that is relatively close to the melting temperature, the potential barrier for crystalline growth is much lower than that corresponding to the crystal nucleation process, and that, therefore, the crystallisation is governed by the crystal nucleation step. The nucleating activity *ϕ* is directly related to the adhesion energy between the nucleating substrate and the nucleated crystalline phase. When the value of *ϕ* is close to 0, the nucleating activity tends to be optimal, whereas, on the contrary, when *ϕ* is close to 1, the nucleating activity tends to be zero, as in the case of homogeneous nucleation. The values of *ϕ* obtained range between 0.99, for a 0.1 % concentration of C₃N₄, and 0.68, for the 2 % concentration. Figure 4 compares evolution of both the nucleating activity (*ϕ*) and the nucleation efficiency (NE) as a function of the concentration for the nanocomposites analysed in this invention.

### EXAMPLE 5. Mechano-dynamic assays of the polypropylene nanocomposites

The mechano-dynamic properties for the series of nanocomposites were measured by subjecting a number of rectangular-geometry test tubes (~19.5 × 5 x 0.5 mm³) to stress deformations. The temperature range used was between - 100 °C and 100 °C. In all cases, a heating rate of 2 °C/min was used and a dynamic force of 6 N was applied. A maximum displacement of 30 microns was established. All the measurements were performed at frequencies of 0.1, 1 and 10 Hz. Figure 4 shows the evolution of the storage modulus of the nanocomposites with temperature. As may be observed, the nanocomposites of this invention present a higher storage modulus than that of the pure polymer throughout the entire temperature range under study. As an example, at room temperature, the storage modulus values obtained are of the order of 1300 MPa for pure polypropylene and 1900 MPa for the nanocomposite with 0.1 % of C₃N₄, which indicates that the nanoparticles contribute to a spectacular increase in the rigidity of the polymer matrix. This is probably due to the good dispersion of the nanoparticles, which results in a larger particle-polymer contact surface area. As regards the effect of the percentage of particles in the nanocomposites, the storage modulus is similar regardless of the concentration of C₃N₄.

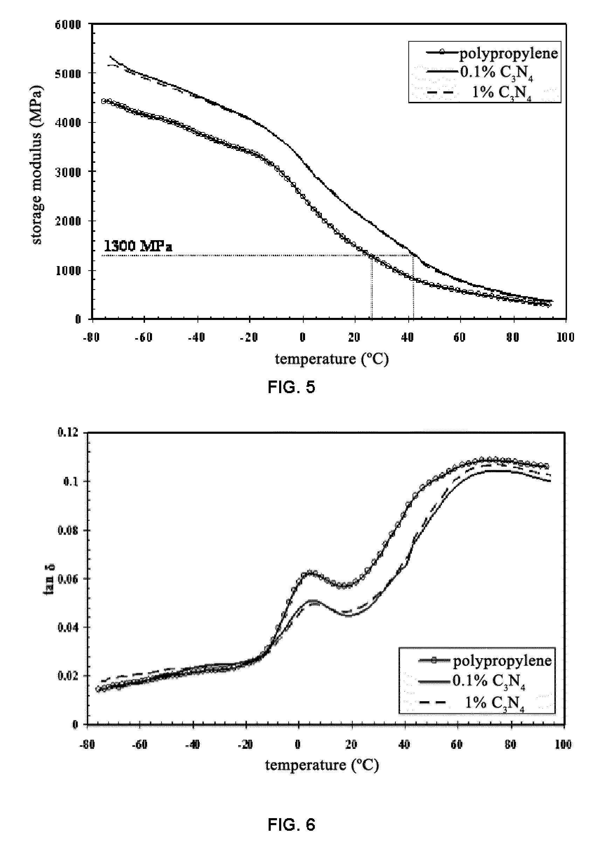

This fact seems to indicate that, in the nanocomposites, the particles are not directly responsible for the increase in the modulus, but that the rigidity of the interphase that is formed is the dominant factor in the increase in the storage modulus of the nanocomposites. On the other hand, the presence of C₃N₄ particles produces an increase in the heat deflection temperature (HDT) of polypropylene. The value of HDT is a measure of the deformation resistance of the material under the influence of strain at high temperatures. The values of HDT referred to in this specification [Huang et al., J. Appl. Polym. Sci. 94, 1885 - 1890 (2004))] refer to the temperature associated with the storage modulus of 1300 MPa (T₁₃₀₀), i.e. the storage modulus of polypropylene at 25 °C. As an example, in Figure 5 we may observe that the incorporation of 0.1 % of C₃N₄ produces an increase in *T₁₃₀₀* of polypropylene to 41 °C.

Finally, Figure 6 represents the evolution of the loss factor (tanδ) as a function of the temperature and the concentration. As may be observed, the incorporation of C₃N₄ contributes to a decrease in the loss factor of polypropylene, which may be related to the reduced mobility of the polymer matrix chains in the presence of these reinforcing particles.

## Claims

1. Material that comprises:
a. A polymer matrix which comprises polypropylene, and
b. carbon nitride nanoparticles.

2. Material according to claim 1, wherein the polymer matrix is a homopolymer, a copolymer, or at least two thermoplastic polymers.

3. Material according to any of claims 1 or 2, wherein the carbon nitride nanoparticles are selected from: C₃N₄, CN or any combination thereof.

4. Material according to claim 3, wherein the nanoparticle content is less than 10 % by weight of the total material.

5. Material according to claim 4, wherein the nanoparticle content is less than 2 % by weight of the total material.

6. Material according to any of claims 1 to 5, wherein the nanoparticles have an ellipsoidal or spherical geometry.

7. Material according to any of claims 1 to 6, wherein the carbon nitride nanoparticles have a size of less than 500 nm.

8. Material according to claim 7, wherein the carbon nitride nanoparticles have a size of less than 300 nm.

9. Material according to any of claims 1 to 8, **characterised in that** it further comprises additives, loads or any combination thereof.

10. Material according to claim 9, wherein the additives are selected from compatibilising agents, dispersant agents, plasticisers, colouring agents, flame retardants, antioxidants, nucleating agents, or any combination thereof.

11. Process for obtaining the material according to any of claims 1 to 10, which comprises processing by mixing polypropylene in the molten state with the carbon nitride nanoparticles.

12. Process according to claim 11, wherein the processing is performed at temperatures lower than 300 °C.

13. Process according to claim 12, wherein the processing is performed at temperatures lower than 220 °C.

14. Process according to any of claims 11 to 13, wherein the processing is performed by a method that is selected from the list that comprises: injection, extrusion, thermoconforming, blow moulding or rotational moulding, spinning, calendering and lamination.

15. Process according to claim 14, wherein the processing is performed by a method that is selected from injection, extrusion or moulding.

16. Use of the material according to claims 1 to 10, for the manufacturing of thermoplastic articles.
